# EUROPÄISCHE PATENTSCHRIFT

(11) **EP 3 271 955 B1**
(45) Veröffentlichungstag und Bekanntmachung des Hinweises auf die Patenterteilung: **09.01.2019**
(21) Anmeldenummer: 15794194.9
(22) Anmeldetag: 13.11.2015
(51) Int. Cl.: H01M 2/10, B60K 1/04, B60L 11/18, H01M 2/20

(54) **FORTBEWEGUNGSMITTEL UND ANORDNUNG ZUR ANBINDUNG EINES ELEKTROCHEMISCHEN ENERGIESPEICHERS AN EIN BORDNETZ EINES ELEKTRISCH ANTREIBBAREN FORTBEWEGUNGSMITTELS**
TRANSPORTATION MEANS AND ARRANGEMENT FOR LINKING AN ELECTROCHEMICAL ENERGY STORE TO AN ONBOARD POWER SUPPLY OF AN ELECTRICALLY DRIVABLE TRANSPORTATION MEANS
MOYEN DE DÉPLACEMENT ET ENSEMBLE POUR RELIER UN ACCUMULATEUR D'ÉNERGIE ÉLECTROCHIMIQUE À UN RÉSEAU DE BORD D'UN MOYEN DE DÉPLACEMENT À ENTRAÎNEMENT ÉLECTRIQUE

(30) Priorität: 16.03.2015 DE 102015204724
(43) Veröffentlichungstag der Anmeldung: 24.01.2018
(73) Patentinhaber: Volkswagen Aktiengesellschaft, 38440 Wolfsburg (DE)
(72) Erfinder: SCHRÖDER, Lutz, 31241 Ilsede (DE)
(86) Internationale Anmeldenummer: PCT/EP2015/076574
(87) Internationale Veröffentlichungsnummer: WO 2016/146212

(56) Entgegenhaltungen:
- DE-A1-102013 004 349
- KR-B1- 100 264 607
- US-A- 6 161 810
- US-A1- 2013 017 436

## Beschreibung

### Stand der Technik

Die Elektrifizierung des Personenindividualverkehrs schreitet derzeit rasch voran. Einer der intensiv verfolgten Ansätze besteht darin, elektrische Energie in Form elektrochemischer Zellen in den Fahrzeugen vorzuhalten. Die hohen Massen der elektrochemischen Zellen bedingen insbesondere dann hohe Kräfte an den elektrischen Polen der Zellen, wenn diese über steife Stromschienen an das Bordnetz oder an weiteren Zellen des Fortbewegungsmittels angekoppelt sind, Vibrationen und andere Kräfte können die Zellen daher erheblich beschädigen. Im Stand der Technik werden Stromschienenabschnitte mit vergleichsweise geringen Flächenträgheitsmomenten und zueinander winklig verlaufenden Leitungsabschnitten vorgeschlagen.

US 2013/0017436 A1 offenbart unterschiedliche Geometrien zur Ausgestaltung elektrischer Anbindungen von elektrochemischen Speicherzellen an das elektrische Bordnetz eines Fortbewegungsmittels.

DE 10 2013 004 349 A1 offenbart einen Polverbinder, der geschichtete Blechlamellen aufweist, um einen winklig verlaufenden Leitungsabschnitt besonders nachgiebig zu gestalten.

Überdies sind im Stand der Technik Drahtgeflechte zur mechanisch flexiblen Führung hoher Ströme bekannt, deren einzelne Litzen jedoch in vergleichsweise hoher Zahl aus dem Gesamtverbund herausbrechen und in Verbindung mit elektrochemischen Energiezellen gefährliche Kurzschlüsse zwischen ungleichnamigen Polen oder an Steuergeräten hervorrufen können.

Es ist daher eine Aufgabe der vorliegenden Erfindung, eine platzsparende und mit einem geringen elektrischen Widerstand behaftete Anbindung zwischen einer elektrochemischen Speicherzelle und einem Bordnetz eines Fortbewegungsmittels zu ermöglichen, welche Relativbewegungen ohne Gefahr für die Speicherzelle zulässt.

### Offenbarung der Erfindung

Die vorstehend identifizierte Aufgabe wird erfindungsgemäß durch eine Anordnung zur Anbindung eines elektrochemischen Energiespeichers an ein Bordnetz eines elektrisch antreibbaren Fortbewegungsmittels gelöst. Der elektrochemische Energiespeicher kann bspw. eine Brennstoffzelle oder eine Traktionsbatterie (auch "Akkumulator") sein. Die Anbindung umfasst eine Stromschiene zur Leitung elektrischer Traktionsenergie in das Bordnetz, welche bspw. integraler Bestandteil des Fortbewegungsmittels sein kann. Eine solche Stromschiene wird mitunter auch als "Hochvolt (HV)-Verbinder" bezeichnet und ist durch vergleichsweise hohe Leiterquerschnitte mit geringem elektrischem Widerstand gekennzeichnet. Die Stromschiene weist eine Längserstreckung auf, welche um ein Vielfaches größer als eine ihrer Quererstreckungen ist. Auf diese Weise kann eine besonders platzsparende, direkte und mit geringstmöglichem elektrischem Widerstand behaftete Übertragung elektrischer Energie von dem elektrochemischen Energiespeicher an einen Traktionsantrieb des Fortbewegungsmittels oder innerhalb der Batterie erfolgen. Erfindungsgemäß ist ein Torsionsstab vorgesehen, welcher eine Längserstreckung aufweist, welche in Richtung des Vektors solcher Torsionsmomente orientiert ist, für welche der Torsionsstab vorgesehen und ausgelegt ist. Die Stromschiene, der Torsionsstab und das Hebelelement sind zum Transport der elektrischen Energie des Energiespeichers elektrisch leitfähig ausgestaltet und elektrisch leitfähig in Reihe miteinander verbunden. Um eine gewisse Toleranz für Relativbewegungen zwischen dem elektrochemischen Energiespeicher und dem Fortbewegungsmittel zu erzeugen, ist die Längserstreckung der Stromschiene im Wesentlichen senkrecht, mit einem Winkel zwischen 80° und 100°, zu der Längserstreckung des Torsionsstabes orientiert. Beispielsweise kann ein im Wesentlichen rechter Winkel zwischen den vorgenannten Längserstreckungen liegen. Das Hebelelement vermittelt einen Versatz, welcher zwischen der Längserstreckung der Stromschiene und der Längserstreckung des Torsionsstabes besteht. Bewegt sich nun die Stromschiene in ihrer Längsrichtung, lenkt sie das Hebelelement aus, welches den Torsionsstab der erfindungsgemäßen Anordnung tordiert. Der Torsionsstab kann über seine Länge die Relativbewegung zwischen der Stromschiene und dem elektrochemischen Energiespeicher ausgleichen. Der Torsionsstab kann bspw.

Bestandteil des elektrochemischen Energiespeichers sein und bevorzugt anteilig innerhalb eines Gehäuses des elektrochemischen Energiespeichers angeordnet sein. Auf diese Weise kann auf raumgreifende Anordnungen, wie sie der Stand der Technik für eine Vermittlung von Relativbewegungen zwischen dem Fortbewegungsmittel und dem Energiespeicher zur Anordnung außerhalb des Energiespeichers vorschlägt, verzichtet werden.

Die Unteransprüche zeigen bevorzugte Weiterbildungen der Erfindung.

Die Anordnung kann bevorzugt eine Hülse aufweisen, welche zur Führung einer Verdrehung des Torsionsstabes vorgesehen ist. Die Hülse kann hierzu den Torsionsstab in einem zum Hebelelement benachbarten Abschnitt umschließen und dessen Position an dieser Stelle definieren, während sie eine Rotation des Torsionsstabes an dieser Position zulässt. Wenn sich die Hülse von dieser Position in Richtung eines dem Hebelelement gegenüberliegenden Endes des Torsionsstabes erstreckt, kann die Hülse den Torsionsstab annähernd über seine gesamte Länge umschließen, führen und am dem Hebelelement gegenüberliegenden Ende drehfest fixieren. An diesem Ende kann bspw. eine Fügeverbindung (z. B. eine Reibschweißverbindung) vorgesehen sein, über welche die Momente des Torsionsstabes in die Hülse und ihre Umgebung eingeleitet werden können.

Um eine Reibung bei der Führung des Torsionsstabes durch die Hülse zu verringern, kann eine Buchse zwischen der Hülse und dem Torsionsstab angeordnet sein, welche bspw. aus einem Reibkräfte minimierenden, elektrisch isolierenden Material (Kunststoff, insbesondere Nylon) gefertigt sein kann. Auf diese Weise wird eine Kontaktstelle zwischen dem Torsionsstab und der Hülse in diesem Bereich vermieden, welche im Betrieb bei hohen Strömen zu Erwärmung und schlimmstenfalls zum Ausfall der Funktion der Anordnung führen könnte.

An dem Hebelelement gegenüberliegenden Ende des Torsionsstabes ("erstes distales Ende") können die Hülse und der Torsionsstab elektrisch leitfähig miteinander verbunden sein. Auf diese Weise kann die Hülse zur großflächigen Übertragung elektrischer Energie in den elektrochemischen Energiespeicher verwendet werden, wodurch sich die Übergangswiderstände verringern und der Wirkungsgrad der Anordnung verbessert wird.

Die Hülse kann eine Struktur zur Verankerung in dem elektrochemischen Energiespeicher aufweisen. Die Struktur kann insbesondere eine Übertragung der in die Hülse eingeleiteten Torsionsmomente begünstigen und daher selbst einen mechanischen Hebel zwischen der Hülse und dem elektrochemischen Energiespeicher darstellen. Insbesondere kann die Struktur nach Art einer Lasche ausgestaltet sein. Die Struktur kann eine parallel zur Längserstreckung des Torsionsstabes orientierte Bohrung aufweisen. Die Bohrung kann zur drehfesten Positionierung der Hülse innerhalb des elektrochemischen Energiespeichers verwendet werden. Die Positionierung der Hülse sollte in einem isolierten Bauteil erfolgen, bzw. die Oberfläche der Hülse muss mit isolierendem Material geschützt sein, da die Hülse an der Stromleitung beteiligt ist.

Bevorzugt kann der Torsionsstab an seinem dem Hebelelement zugewandten Ende ("zweites distales Ende") ein Gewinde zur Verschraubung des Hebelelementes aufweisen. Dies erleichtert insbesondere den Herstellprozess beim Reibschweißen des Torsionstabes in die Hülse. Proximal kann das Gewinde mit einem Flansch abgeschlossen sein, gegen welchen das Hebelelement mittels der Verschraubung gepresst wird. Hierdurch ergibt sich eine besonders drehfeste Verbindung zwischen dem Hebelelement und dem Torsionsstab, welche durch formschlüssige, korrespondierende Strukturen in dem Hebelelement und dem Torsionsstab weiter begünstigt werden kann.

Entsprechend kann das Hebelelement einen Gewindebolzen aufweisen, welcher zur Verschraubung mit der Stromschiene dient. Der Gewindebolzen kann bspw. an das Hebelelement angeschweißt sein, sodass die Stromschiene durch die Verschraubung auf das Hebelelement gepresst wird. Um die in Längserstreckungsrichtung der Stromschiene übertragenen Wechselkräfte möglichst vollständig in Verdrehungen des Torsionsstabes umzuwandeln, kann die Verbindung zwischen dem Hebelelement und der Stromschiene verdrehbar ausgestaltet sein. Insbesondere können Wälzlager, insbesondere Axiallager, die Verdrehung des Hebelelements gegenüber der Stromschiene unterstützen. Eine Übertragung der elektrischen Energie kann durch Aufbringung von die Leitfähigkeit begünstigenden Oberflächen und fluiden Hilfsmitteln sichergestellt werden.

Gemäß einem zweiten Aspekt der vorliegenden Erfindung wird ein Fortbewegungsmittel vorgeschlagen, welches insbesondere als Pkw, als Transporter, als Lkw, als Motorrad, als Luft- und/oder Wasserfahrzeug ausgestaltet sein kann. Das Fortbewegungsmittel weist eine elektrische Maschine auf, welche insbesondere als Traktionsantrieb ausgestaltet sein kann. Eine erfindungsgemäße Anordnung gemäß dem erstgenannten Erfindungsaspekt stellt eine elektrische und mechanische Anbindung des Fortbewegungsmittels an einen internen elektrochemischen Energiespeicher sicher und vermeidet Beschädigungen an der Stromschiene sowie am elektrochemischen Energiespeicher. Die Merkmale, Merkmalskombinationen und die sich aus diesen ergebenden Vorteile entsprechen den in Verbindung mit dem erstgenannten Erfindungsaspekt ausgeführten derart ersichtlich, dass zur Vermeidung von Wiederholungen auf die obigen Ausführungen verwiesen wird.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Übersicht eines Ausführungsbeispiels in einer erfindungsgemäßen Anordnung;
- Figur 2: eine perspektivische Ansicht des Ausführungsbeispiels einer erfindungsgemäßen Anordnung; und
- Figur 3: eine geschnittene Darstellung des in Figur 2 vorgestellten Ausführungsbeispiels des erfindungsgemäßen Anordnung.

### Ausführungsformen der Erfindung

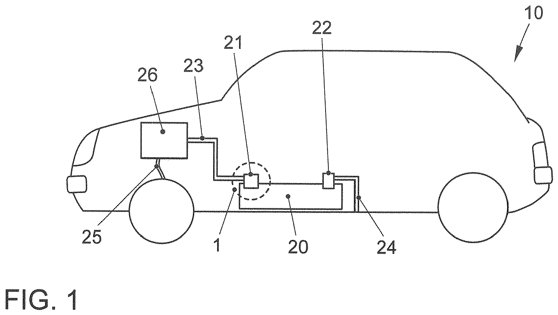

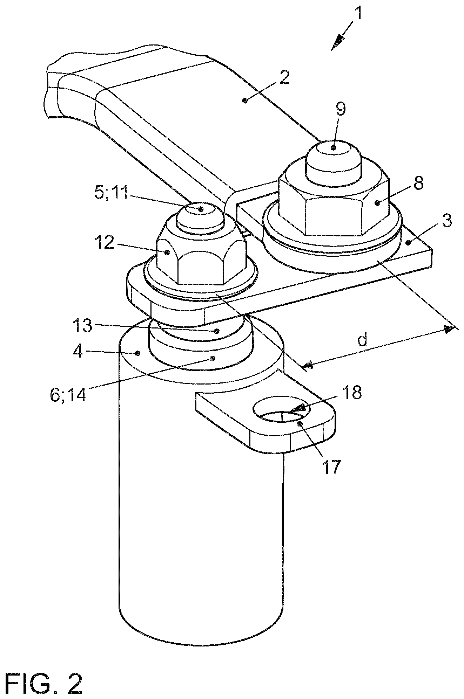

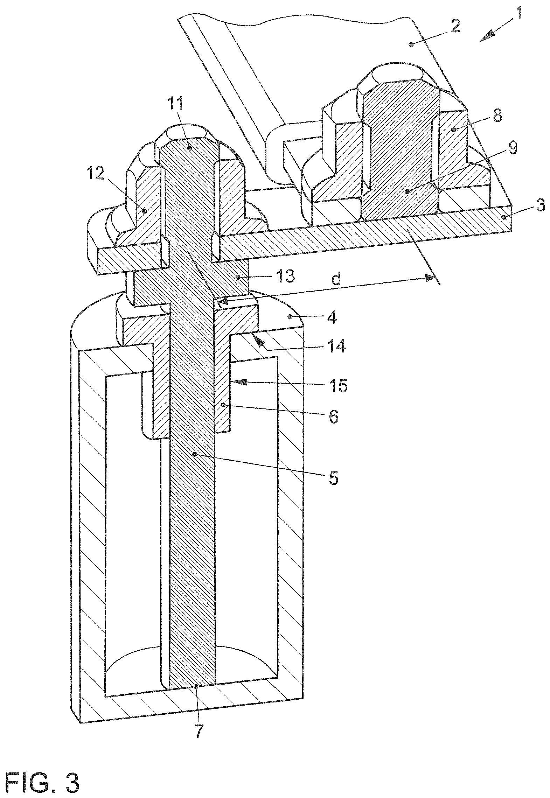

Figur 1 zeigt einen elektrisch antreibbaren Pkw 10 als Fortbewegungsmittel, dessen Traktionsmaschine 26 über eine ein Drahtgeflecht umfassende Masseverbindung 25 mit der Fahrzeugmasse verbunden ist. Eine erste Stromschiene 23 verbindet die Traktionsmaschine 26 mit einem ersten Pol 21 eines elektrochemischen Energiespeichers 20. Ein zweiter Pol 22 des elektrochemischen Energiespeichers 20 ist über eine zweite Stromschiene 24 mit der Fahrzeugmasse verbunden. Ein gestrichelt umrandeter Bereich 1 wird in Verbindung mit den Figuren 2 und 3 im Detail dargestellt und erläutert.

Figur 2 zeigt eine perspektivische Ansicht der Anordnung 1, in welcher eine isolierte Stromschiene 2 mittels einer Mutter 8 und eines Gewindebolzens 9 an einem Hebelelement 3 verschraubt ist. Im Bereich der Verschraubung ist die Stromschiene 2 nicht isoliert, um eine Übertragung elektrischer Traktionsenergie zu gewährleisten. Das Hebelelement 3 ist im Wesentlichen rechtwinklig zur Längserstreckung der Stromschiene 2 orientiert und weist an seinem anderen Ende eine Bohrung auf, durch welche der Schraubbolzen 11 eines Torsionsstabes 5 ragt und mittels einer Mutter 12 drehfest verschraubt ist. Die mechanisch wirksame Länge d des Hebelelements 3 überwindet einen Versatz der Stromschiene 2 gegenüber einer Achse des Torsionsstabes 5, der unterhalb des Gewindebolzens 11 einen Flansch 13 aufweist, gegen welchen die Mutter 12 das Hebelelement 3 presst. Der Flansch 13 liegt auf einem Flansch 14 einer Buchse 6, bevorzugt aus Kunststoff, insbesondere Nylon gefertigt, auf, welche den Torsionsstab 5 in einer metallischen Hülse 4 führt. Mit anderen Worten sorgt die Buchse 6 für eine verringerte Reibkraft zwischen dem Torsionsstab 5 und der Hülse 4. Die Buchse 6 dient auch zur Vermeidung von Verschweißungen bei hohen Strömen zwischen dem Torsionsstab 5 und der Hülse 4. Die Hülse 4 kann als Bestandteil eines elektrochemischen Energiespeichers aufgefasst werden und stellt eine metallische Oberfläche zur elektrischen Anbindung der Zellen des elektrochemischen Energiespeichers an den Torsionsstab 5 bereit. Zur mechanischen Anbindung an den elektrochemischen Energiespeicher weist die Hülse 4 eine im Wesentlichen parallel, parallel oder mit einem Winkel kleiner 10°, zur Stromschiene orientierte bspw. laschenförmig ausgebildete Struktur 17 zur mechanischen Anbindung auf, in welcher eine parallel zur Längserstreckung des Torsionsstabes orientierte Bohrung 18 eine Verbindung mit dem elektrochemischen Energiespeicher ermöglicht. Die Struktur 17 ist zur Stabilisierung der Anbindung am mit der Buchse 6 ausgestatteten ersten Ende der Hülse 4 angeordnet.

Figur 3 zeigt eine geschnittene Darstellung der in Figur 2 gezeigten Anordnung 1, aus welcher die Geometrie der Verschraubungen des Hebelelements 3 sowie die Lagerung des Torsionsstabes 5 innerhalb der Hülse 4 ersichtlich ist. Ein Schaft 15 der Buchse 6 weist an der engsten Stelle zwischen der Hülse 4 und dem Torsionsstab 5 eine Verjüngung seines Außendurchmessers auf, wodurch sie nach einem Einstecken des Torsionsstabes 5 gegen eine Verschiebung in axialer Richtung gesichert ist. Im Zuge der Montage kann durch Rotation des Torsionsstabes 5 in der Hülse 4 eine Reibschweißverbindung an einem zweiten Ende 7 des Torsionsstabes 5 erzeugt werden, so dass der Torsionsstab 5 und die Hülse 4 durch eine Reibschweißverbindung drehfest miteinander verbunden werden.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Anordnung
- 2: Stromschiene
- 3: Hebelelement
- 4: Hülse
- 5: Torsionsstab
- 6: Buchse
- 7: zweites Ende des Torsionsstabes
- 8: Mutter
- 9: Gewindebolzen
- 10: elektrisch antreibbarer Pkw
- 11: Gewindebolzen
- 12: Mutter
- 13: Flansch
- 14: Flansch
- 15: Schaft
- 17: Struktur
- 18: Bohrung
- 20: elektrochemischer Energiespeicher, Traktionsbatterie
- 21, 22: Pol
- 23, 24: Stromschiene
- 25: Masseverbindung
- 26: elektrische Traktionsmaschine
- d: Versatz zwischen Stromschiene und Torsionsstab

## Patentansprüche

1. Anordnung zur Anbindung eines elektrochemischen Energiespeichers (20) an ein Bordnetz eines elektrisch antreibbaren Fortbewegungsmittels (10) umfassend:
- eine Stromschiene (2; 23, 24) zur Leitung elektrischer Traktionsenergie in das Bordnetz,
- einen Torsionsstab (5), und
- ein Hebelelement (3), wobei
die Stromschiene (2; 23, 24), der Torsionsstab (5) und das Hebelelement (3) elektrisch leitfähig ausgestaltet sind,
die Stromschiene (2; 23, 24) und der Torsionsstab (5) über das Hebelelement (3) elektrisch leitfähig miteinander verbunden sind,
wobei eine Längserstreckung der Stromschiene (2; 23, 24) im Wesentlichen senkrecht zu einer Längserstreckung des Torsionsstabes (5) orientiert ist, und das Hebelelement (3) einen Versatz (d) zwischen der Längserstreckung der Stromschiene (2; 23, 24) und der Längserstreckung des Torsionsstabes (5) aufweist.

2. Anordnung nach Anspruch 1 weiter umfassend eine Hülse (4) zur Führung einer Torsion des Torsionsstabes (5).

3. Anordnung nach Anspruch 1 oder 2 weiter umfassend eine Buchse (6) zwischen der Hülse (4) und dem Torsionsstab (5).

4. Anordnung nach einem der vorstehenden Ansprüche, wobei die Hülse (4) und der Torsionsstab (5) an einem gemeinsamen ersten distalen Ende (7) elektrisch leitfähig und mechanisch drehfest miteinander verbunden sind.

5. Anordnung nach einem der vorstehenden Ansprüche, wobei die Hülse (4) eine Struktur (17) zur Verankerung in dem elektrochemischen Energiespeicher (20) aufweist.

6. Anordnung nach Anspruch 5, wobei die Struktur (17) eine Lasche mit einer parallel zur Längserstreckung des Torsionsstabes orientierten Bohrung (18) aufweist.

7. Anordnung nach einem der vorstehenden Ansprüche, wobei der Torsionsstab (5) an einem zweiten distalen Ende (11) ein Gewinde zur Verschraubung des Hebelelementes (3) aufweist.

8. Anordnung nach einem der vorstehenden Ansprüche, wobei das Hebelelement (3) einen Gewindebolzen (9) zur Verschraubung der Stromschiene (2; 23, 24) aufweist.

9. Anordnung nach einem der vorstehenden Ansprüche, wobei das Hebelelement (3) drehbar an der Stromschiene (2; 23, 24) befestigt ist.

10. Fortbewegungsmittel, insbesondere elektrisch antreibbares Straßenfahrzeug, umfassend eine Anordnung nach einem der vorstehenden Ansprüche.

## Claims

1. Arrangement for connecting an electrochemical energy store (20) to an on-board power supply of an electrically driveable means of locomotion (10), comprising:
- a busbar (2; 23, 24) for conducting electrical traction energy into the on-board power supply,
- a torsion bar (5), and
- a lever element (3), wherein
the busbar (2; 23, 24), the torsion bar (5) and the lever element (3) are configured in an electrically conductive fashion,
the busbar (2; 23, 24) and the torsion bar (5) are connected to one another in an electrically conductive fashion via the lever element (3),
wherein a longitudinal extent of the busbar (2; 23, 24) is oriented essentially perpendicularly with respect to a longitudinal extent of the torsion bar (5), and the lever element (3) has an offset (d) between the longitudinal extent of the busbar (2; 23, 24) and the longitudinal extent of the torsion bar (5).

2. Arrangement according to Claim 1, further comprising a sleeve (4) for guiding torsion of the torsion bar (5).

3. Arrangement according to Claim 1 or 2, further comprising a socket (6) between the sleeve (4) and the torsion bar (5).

4. Arrangement according to one of the preceding claims, wherein the sleeve (4) and the torsion bar (5) are connected to one another at a common first distal end (7) in an electrically conductive and mechanically rotationally fixed fashion.

5. Arrangement according to one of the preceding claims, wherein the sleeve (4) has a structure (17) for anchoring in the electrochemical energy store (20) .

6. Arrangement according to Claim 5, wherein the structure (17) has a clip with a drill hole (18) which is oriented parallel to the longitudinal extent of the torsion bar.

7. Arrangement according to one of the preceding claims, wherein the torsion bar (5) has, at a second distal end (11), a thread for screwing the lever element (3).

8. Arrangement according to one of the preceding claims, wherein the lever element (3) has a threaded bolt (9) for screwing the busbar (2; 23, 24).

9. Arrangement according to one of the preceding claims, wherein the lever element (3) is rotatably fastened to the busbar (2; 23, 24).

10. Means of locomotion, in particular a road vehicle which can have an electric drive, comprising an arrangement according to one of the preceding claims.

## Revendications

1. Arrangement pour connecter un accumulateur d'énergie (20) électrochimique à un réseau de bord d'un moyen de transport (10) pouvant être propulsé électriquement, comportant :
- une barre-bus (2 ; 23, 24) destinée à conduire de l'énergie de traction électrique dans le réseau de bord,
- une barre de torsion (5) et
- un élément formant levier (3),
la barre-bus (2 ; 23, 24), la barre de torsion (5) et l'élément formant levier (3) étant conçus électriquement conducteurs,
la barre-bus (2 ; 23, 24), la barre de torsion (5) et l'élément formant levier (3) étant reliés ensemble de manière électriquement conductrice,
une extension longitudinale de la barre-bus (2 ; 23, 24) étant orientée sensiblement perpendiculairement à une extension longitudinale de la barre de torsion (5),
et l'élément formant levier (3) possédant un décalage (d) entre l'extension longitudinale de la barre-bus (2 ; 23, 24) et l'extension longitudinale de la barre de torsion (5) .

2. Arrangement selon la revendication 1, comportant en outre un manchon (4) servant à guider une torsion de la barre de torsion (5).

3. Arrangement selon la revendication 1 ou 2, comportant en outre une douille (6) entre le manchon (4) et la barre de torsion (5).

4. Arrangement selon l'une des revendications précédentes, le manchon (4) et la barre de torsion (5) étant reliés l'un à l'autre au niveau d'une première extrémité distale (7) commune de manière électriquement conductrice et mécaniquement solidaires en rotation.

5. Arrangement selon l'une des revendications précédentes, le manchon (4) possédant une structure (17) destinée à l'ancrage dans l'accumulateur d'énergie (20) électrochimique.

6. Arrangement selon la revendication 5, la structure (17) possédant une languette pourvue d'un perçage (18) orienté parallèlement à l'extension longitudinale de la barre de torsion.

7. Arrangement selon l'une des revendications précédentes, la barre de torsion (5) possédant au niveau d'une deuxième extrémité distale (11) un filet destiné au vissage de l'élément formant levier (3).

8. Arrangement selon l'une des revendications précédentes, l'élément formant levier (3) possédant un boulon fileté (9) destiné au vissage de la barre-bus (2 ; 23, 24).

9. Arrangement selon l'une des revendications précédentes, l'élément formant levier (3) étant fixé de manière rotative à la barre-bus (2 ; 23, 24).

10. Moyen de transport, notamment véhicule routier pouvant être propulsé électriquement, comprenant un arrangement selon l'une des revendications précédentes.
